# EUROPÄISCHE PATENTSCHRIFT

(11) **EP 3 383 138 B1**
(45) Veröffentlichungstag und Bekanntmachung des Hinweises auf die Patenterteilung: **30.09.2020**
(21) Anmeldenummer: 18161979.2
(22) Anmeldetag: 15.03.2018
(51) Int. Cl.: H05B 6/12

(54) **GARGERÄTEVORRICHTUNG**
COOKING DEVICE
DISPOSITIF D'APPAREIL DE CUISSON

(30) Priorität: 30.03.2017 ES 201730495
(43) Veröffentlichungstag der Anmeldung: 03.10.2018
(73) Patentinhaber: BSH Hausgeräte GmbH, 81739 München (DE)
(72) Erfinder: Diez Esteban, Cristina, 50017 Zaragoza (ES); Felices Betran, Jorge, 22003 Huesca (Spain) (ES); Hernandez Blasco, Pablo Jesus, 50019 Zaragoza (ES); Jaca Equiza, Izaskun, 50008 Zaragoza (ES); Lope Moratilla, Ignacio, 50010 Zaragoza (ES); Moya Albertin, Maria Elena, 50002 Zaragoza (ES)

(56) Entgegenhaltungen:
- JP-A- 2010 015 764
- JP-A- 2010 257 891
- JP-B2- 5 117 992

## Beschreibung

Die Erfindung betrifft eine Gargerätevorrichtung nach dem Oberbegriff des Anspruchs 1. Aus dem Stand der Technik ist bereits eine als Kochfeldvorrichtung ausgebildete Gargerätevorrichtung mit einer Heizeinheit bekannt. Die Heizeinheit weist ein inneres Heizelement und ein im Wesentlichen polygonales äußeres Heizelement auf. Das äußere Heizelement weist eine Haupterstreckungsebene und eine Haupterstreckungsrichtung auf. Bei einer senkrechten Betrachtung der Heizeinheit auf die Haupterstreckungsebene weist das äußere Heizelement eine im Wesentlichen rechteckige Gestalt auf. Das innere Heizelement weist bei einer senkrechten Betrachtung der Heizeinheit auf die Haupterstreckungsebene eine im Wesentlichen kreisförmige Gestalt auf. Eine Magnetflussbündelungseinheit weist mehrere überlappende Magnetflussbündelungselemente auf, welche bei einer senkrechten Betrachtung der Heizeinheit auf die Haupterstreckungsebene überlappend über die Heizelemente angeordnet sind. Ein Teil der Magnetflussbündelungselemente ist in Bereichen minimalen Abstands zwischen den Heizelementen angeordnet, und zwar entlang zweier Hauptachsen der Heizeinheit. Aus einer derartigen Anordnung der Magnetflussbündelungselemente in Bereichen minimalen Abstands zwischen den Heizelementen und damit insbesondere entlang der Hauptachsen resultiert eine ungleichmäßige Wärmeverteilung in einem Gargeschirrboden eines zu beheizenden Gargeschirrs. Diese ungleichmäßige Wärmeverteilung äußert sich nicht zuletzt durch Hotspots und eine schlechte Leistungsfähigkeit. JP 2010 25789 A offenbart eine Gargerätvorrichtung laut des Oberbegriffes des Anspruchs 1.

Die Aufgabe der Erfindung besteht insbesondere darin, eine gattungsgemäße Vorrichtung mit verbesserten Eigenschaften hinsichtlich einer Beheizung bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Gargerätevorrichtung, insbesondere von einer Kochfeldvorrichtung, mit zumindest einer Heizeinheit, welche zumindest ein inneres Heizelement und zumindest ein wenigstens im Wesentlichen polygonales äußeres Heizelement aufweist, wobei zumindest eines der Heizelemente eine Haupterstreckungsebene aufweist, und mit zumindest einer Magnetflussbündelungseinheit, welche zu einer Bündelung eines durch die Heizeinheit bereitgestellten magnetischen Flusses vorgesehen ist und welches zumindest ein überlappendes Magnetflussbündelungselement aufweist, welches bei einer senkrechten Betrachtung der Heizeinheit auf die Haupterstreckungsebene überlappend über die Heizelemente angeordnet ist.

Erfindungsgemäß sind bei einer senkrechten Betrachtung der Heizeinheit auf die Haupterstreckungsebene Bereiche minimalen Abstands zwischen den Heizelementen frei von überlappenden Magnetflussbündelungselementen.

Durch die erfindungsgemäße Ausgestaltung können vorteilhafte Eigenschaften hinsichtlich einer Beheizung erreicht werden. Ferner kann insbesondere eine optimale Leistungsfähigkeit erreicht werden. Insbesondere kann eine optimierte Flächenbeheizung erzielt werden, und zwar insbesondere in einem Vergleich zu einer Heizeinheit, bei welcher in Bereichen minimalen Abstands zwischen den Heizelementen überlappende Magnetflussbündelungselemente angeordnet sind. Insbesondere können Hotspots eliminiert werden, und zwar vorteilhaft in den Bereichen minimalen Abstands zwischen den Heizelementen. Durch die optimierte Flächenbeheizung kann insbesondere eine Unabhängigkeit eines Garergebnisses von einer Position eines Gargeschirrs ermöglicht werden. Durch das wenigstens im Wesentlichen polygonale äußere Heizelement können zwei insbesondere analog aufgebaute Heizeinheiten insbesondere kompakt relativ zueinander angeordnet werden und/oder eine freie Fläche zwischen zwei analog aufgebauten Heizeinheiten, welche benachbart zueinander angeordnet sind, kann minimal gestaltet werden, wodurch insbesondere eine optimierte Flächenbeheizung vorzugsweise in einem Vergleich zu zwei zueinander benachbarten Heizeinheiten mit jeweils zwei von einer wenigstens im Wesentlichen polygonalen Gestalt abweichenden äußeren Heizelementen erzielt werden kann. In aufgestelltem Gargeschirr kann insbesondere eine optimierte Wärmeverteilung ermöglicht werden. Insbesondere kann ein einfacher Herstellungsprozess der Heizeinheit erzielt werden. In Bereichen, welche sich von den Bereichen minimalen Abstands zwischen den Heizelementen unterscheiden, kann insbesondere ausreichend Platz zu einer Anordnung zumindest einer weiteren Einheit, wie beispielsweise zumindest einer Sensoreinheit, geschaffen werden. Insbesondere kann eine verbesserte Beheizung von Gargeschirr ermöglicht werden. Das Prinzip, dass Bereiche minimalen Abstands zwischen den Heizelementen frei von überlappenden Magnetflussbündelungselementen sind, kann insbesondere auf vielfältige Gestalten und/oder Kombinationen von Gestalten des inneren Heizelements und des äußeren Heizelements angewendet werden.

Unter einer "Gargerätevorrichtung", insbesondere unter einer "Kochfeldvorrichtung" und vorteilhaft unter einer "Induktionskochfeldvorrichtung" soll insbesondere zumindest ein Teil, insbesondere eine Unterbaugruppe, eines Gargeräts, insbesondere eines Kochfelds und vorteilhaft eines Induktionskochfelds, verstanden werden. Beispielsweise könnte es sich bei einem die Gargerätevorrichtung aufweisenden Gargerät um einen Backofen und/oder um eine Mikrowelle und/oder um ein Grillgerät und/oder um ein Dampfgargerät handeln. Vorteilhaft ist ein als Gargerät ausgebildetes Haushaltsgerät ein Kochfeld und vorzugsweise ein Induktionskochfeld.

Unter einer "Heizeinheit" soll insbesondere eine Einheit verstanden werden, welche zu einer Erhitzung und/oder Beheizung von aufgestelltem Gargeschirr vorgesehen ist. Unter einem "Heizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem Gargeschirr zuzuführen. Vorteilhaft ist das Heizelement insbesondere als Induktionsheizelement ausgebildet und dabei vorzugsweise dazu vorgesehen, ein elektromagnetisches Wechselfeld insbesondere mit einer Frequenz von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden.

Die Heizeinheit weist vorteilhaft genau ein inneres Heizelement und genau ein äußeres Heizelement auf. Das innere Heizelement ist insbesondere als ein innerstes Heizelement der Heizeinheit ausgebildet. Das äußere Heizelement ist insbesondere als ein äußerstes Heizelement der Heizeinheit ausgebildet.

Das äußere Heizelement weist bei einer senkrechten Betrachtung der Heizeinheit auf die Haupterstreckungsebene eine wenigstens im Wesentlichen polygonale Gestalt auf. Unter einem "wenigstens im Wesentlichen polygonalen" Heizelement soll insbesondere ein Heizelement verstanden werden, welches bei einer senkrechten Betrachtung der Heizeinheit auf die Haupterstreckungsebene zumindest zwei geradlinige Kanten aufweist, welche schräg und/oder winklig relativ zueinander angeordnet sind. Insbesondere schließen die geradlinigen Kanten des wenigstens im Wesentlichen polygonalen Heizelements bei einer senkrechten Betrachtung der Heizeinheit auf die Haupterstreckungsebene einen kleinsten Winkel zwischen exklusive 0° und inklusive 90° ein. Die geradlinigen Kanten des wenigstens im Wesentlichen polygonalen Heizelements sind bei einer senkrechten Betrachtung der Heizeinheit auf die Haupterstreckungsebene insbesondere nicht um 180° relativ zueinander versetzt und weisen bei einer gedachten Verlängerung der Kanten insbesondere zumindest einen Schnittpunkt auf.

Vorteilhaft weist das wenigstens im Wesentlichen polygonale Heizelement bei einer senkrechten Betrachtung der Heizeinheit auf die Haupterstreckungsebene zumindest drei und besonders vorteilhaft zumindest vier geradlinige Kanten auf, von welchen zumindest zwei, insbesondere zueinander benachbarte Kanten wenigstens im Wesentlichen senkrecht zueinander ausgerichtet sind. Alternativ oder zusätzlich könnte das wenigstens im Wesentlichen polygonale Heizelement bei einer senkrechten Betrachtung der Heizeinheit auf die Haupterstreckungsebene eine größere Anzahl an geradlinigen Kanten aufweisen, wie beispielsweise zumindest sechs und/oder zumindest acht und/oder zumindest zwölf.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und welche insbesondere durch den Mittelpunkt des Quaders verläuft.

Die Magnetflussbündelungseinheit und insbesondere das überlappende Magnetflussbündelungselement besteht insbesondere wenigstens zu einem Großteil aus Ferriten, welche insbesondere ferromagnetische keramische Werkstoffe sind. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden.

Unter "Ferriten" sollen insbesondere ferromagnetische und/oder ferrimagnetische keramische Werkstoffe verstanden werden. Insbesondere ist die Magnetflussbündelungseinheit dazu vorgesehen, eine Kopplung zwischen der Heizeinheit und zumindest einem aufgestellten Gargeschirr, welches in einer Einbaulage insbesondere wenigstens teilweise oberhalb der Heizeinheit angeordnet ist, zu verbessern. Die Magnetflussbündelungseinheit ist insbesondere dazu vorgesehen, einen von der Heizeinheit bereitgestellten magnetischen Fluss insbesondere wesentlich zu verstärken und damit insbesondere in dem Gargeschirr, insbesondere in einem Gargeschirrboden des Gargeschirrs, induzierte Wärmeverluste zu verstärken und/oder zu erhöhen, und zwar insbesondere in einem Vergleich zu einer Ausgestaltung unter Vermeidung einer Magnetflussbündelungseinheit. Insbesondere ist die Magnetflussbündelungseinheit dazu vorgesehen, zumindest einen Ort gegen einen von der Heizeinheit bereitgestellten magnetischen Fluss wenigstens teilweise abzuschirmen. Die Magnetflussbündelungseinheit ist insbesondere dazu vorgesehen, von der Heizeinheit bereitgestellte Streufelder zu minimieren.

Insbesondere ist das überlappende Magnetflussbündelungselement den Heizelementen zugeordnet. Unter der Wendung, dass ein Magnetflussbündelungselement einem Heizelement "zugeordnet" ist, soll insbesondere verstanden werden, dass das Magnetflussbündelungselement in wenigstens einem Betriebszustand, in welchem das Heizelement insbesondere betrieben ist und insbesondere einen magnetischen Fluss bereitstellt, den von dem Heizelement bereitgestellten magnetischen Fluss wenigstens teilweise bündelt. Ein Magnetflussbündelungselement, welches insbesondere den Heizelementen zugeordnet ist, bündelt in wenigstens einem Betriebszustand insbesondere wenigstens teilweise einen jeweiligen von sämtlichen sich in Betrieb befindenden Heizelementen der Heizelemente, welchen das Magnetflussbündelungselement insbesondere zugeordnet ist, bereitgestellten magnetischen Fluss. Unter der Wendung, dass ein Magnetflussbündelungselement einen magnetischen Fluss "wenigstens teilweise" bündelt, soll insbesondere verstanden werden, dass das Magnetflussbündelungselement den magnetischen Fluss alleine bündelt oder dass das Magnetflussbündelungselement den magnetischen Fluss gemeinsam mit zumindest einem zweiten Magnetflussbündelungselement bündelt.

Das überlappende Magnetflussbündelungselement ist insbesondere in einem Nahbereich zumindest eines der Heizelemente und vorteilhaft in einem Nahbereich eines jeden der Heizelemente angeordnet. Bei einer senkrechten Betrachtung auf zumindest eine Haupterstreckungsebene wenigstens eines der Heizelemente ist das überlappende Magnetflussbündelungselement insbesondere wenigstens zu einem Großteil innerhalb einer von den Heizelementen aufgespannten Fläche angeordnet. Das überlappende Magnetflussbündelungselement ist insbesondere frei von einer Sättigung.

Das überlappende Magnetflussbündelungselement ist insbesondere als ein Stab und/oder als ein Balken und/oder als ein Block ausgebildet, wodurch insbesondere geringe Kosten erzielt werden können, und zwar insbesondere in einem Vergleich zu einem aus Ferriten bestehenden plattenartigen Magnetflussbündelungselement, welches sich bei einer senkrechten Betrachtung der Heizeinheit auf zumindest eine Haupterstreckungsebene wenigstens eines der Heizelemente der Heizeinheit insbesondere über eine gesamte Fläche der Heizeinheit erstrecken könnte.

Bei einer senkrechten Betrachtung der Heizeinheit auf die Haupterstreckungsebene ist das überlappende Magnetflussbündelungselement insbesondere wenigstens teilweise innerhalb einer von dem inneren Heizelement aufgespannten Fläche und zusätzlich insbesondere wenigstens teilweise innerhalb einer von dem äußeren Heizelement aufgespannten Fläche angeordnet.

In den Bereichen minimalen Abstands zwischen den Heizelementen sind bei einer senkrechten Betrachtung der Heizeinheit auf die Haupterstreckungsebene insbesondere keine Magnetflussbündelungselemente angeordnet. Insbesondere sind bei einer senkrechten Betrachtung der Heizeinheit auf die Haupterstreckungsebene Bereiche minimalen Abstands zwischen den Heizelementen frei von jeglichen Magnetflussbündelungselementen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß sind bei einer senkrechten Betrachtung der Heizeinheit auf die Haupterstreckungsebene Bereiche um zumindest eine erste Hauptachse der Heizeinheit, die wenigstens im Wesentlichen senkrecht zu zumindest einer Kante und insbesondere zu zumindest zwei einander gegenüberliegenden Kanten der wenigstens im Wesentlichen polygonalen Gestalt des äußeren Heizelements ausgerichtet ist, und um zumindest eine zweite Hauptachse der Heizeinheit, die wenigstens im Wesentlichen senkrecht zu der ersten Hauptachse ausgerichtet ist, frei von überlappenden I Magnetflussbündelungselementen. Insbesondere weist die Heizeinheit zumindest eine erste Hauptachse und insbesondere zusätzlich zumindest eine zweite Hauptachse auf, welche wenigstens im Wesentlichen senkrecht zu der ersten Hauptachse ausgerichtet ist. Insbesondere verlaufen die erste Hauptachse und die zweite Hauptachse bei einer senkrechten Betrachtung der Heizeinheit auf die Haupterstreckungsebene durch die Bereiche minimalen Abstands zwischen den Heizelementen, und zwar vorteilhaft wenigstens im Wesentlichen mittig. Bei einer senkrechten Betrachtung der Heizeinheit auf die Haupterstreckungsebene sind die Bereiche minimalen Abstands zwischen den Heizelementen insbesondere wenigstens im Wesentlichen spiegelsymmetrisch um die Hauptachsen angeordnet. Insbesondere verläuft die erste Hauptachse und/oder die zweite Hauptachse bei einer senkrechten Betrachtung der Heizeinheit auf die Haupterstreckungsebene durch einen Mittelpunkt und/oder Schwerpunkt der Heizeinheit. Die erste Hauptachse und die zweite Hauptachse schneiden sich bei einer senkrechten Betrachtung der Heizeinheit auf die Haupterstreckungsebene insbesondere in einem Mittelpunkt und/oder Schwerpunkt der Heizeinheit. Der Ausdruck " wenigstens im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist die erste Hauptachse und/oder die zweite Hauptachse bei einer senkrechten Betrachtung der Heizeinheit auf die Haupterstreckungsebene im Wesentlichen senkrecht zu zumindest einer Kante und insbesondere zu zumindest zwei einander gegenüberliegenden Kanten der wenigstens im Wesentlichen polygonalen Gestalt des äußeren Heizelements ausgerichtet. Dadurch kann insbesondere eine optimierte Flächenbeheizung erzielt werden.

Zudem wird vorgeschlagen, dass eine Längsachse des überlappenden Magnetflussbündelungselements bei einer senkrechten Betrachtung der Heizeinheit auf die Haupterstreckungsebene mit der ersten Hauptachse einen minimalen Winkel von mindestens 5°, insbesondere von mindestens 10°, vorteilhaft von mindestens 12° und vorzugsweise von mindestens 15° einschließt. Bei einer senkrechten Betrachtung der Heizeinheit auf die Haupterstreckungsebene schließt eine Längsachse des überlappenden Magnetflussbündelungselements mit der ersten Hauptachse insbesondere einen minimalen Winkel von maximal 40°, insbesondere von maximal 35°, vorteilhaft von maximal 32° und vorzugsweise von maximal 30° ein. Unter einer "Längsachse" eines Objekts soll insbesondere eine gedachte unendlich lange Gerade verstanden werden, welche parallel zu einer längsten Seite eines kleinsten gedachten geometrischen Quaders, welcher das Objekt gerade noch vollständig umschließt, ausgerichtet ist und welche insbesondere durch einen Mittelpunkt und/oder Schwerpunkt des Objekts verläuft. Dadurch kann insbesondere eine Entstehung von Hotspots gezielt vermieden werden, wodurch insbesondere eine hohe Leistungsfähigkeit erzielt werden kann. Insbesondere kann eine Wärmeverteilung in einem von der Heizeinheit beheizten Gargeschirrboden optimiert werden.

Beispielsweise könnte die Magnetflussbündelungseinheit insbesondere ausschließlich das überlappende Magnetflussbündelungselement aufweisen. Vorzugsweise weist die Magnetflussbündelungseinheit zumindest ein zweites überlappendes Magnetflussbündelungselement auf, welches bei einer senkrechten Betrachtung der Heizeinheit auf die Haupterstreckungsebene gemeinsam mit dem überlappenden Magnetflussbündelungselement innerhalb eines durch die Hauptachsen aufgespannten Quadranten angeordnet ist. Insbesondere weist die Magnetflussbündelungseinheit pro Quadrant zumindest ein überlappendes Magnetflussbündelungselement und zumindest ein zweites überlappendes Magnetflussbündelungselement auf, welche insbesondere jeweils gemeinsam in dem entsprechenden Quadranten angeordnet sind. Das überlappende Magnetflussbündelungselement und das zweite überlappende Magnetflussbündelungselement könnten insbesondere analog zueinander aufgebaut und/oder ausgebildet sein, wodurch insbesondere geringe Kosten und/oder eine geringe Lagerhaltung und/oder ein einfacher Herstellungsprozess erzielt werden kann. Insbesondere könnte das zweite überlappende Magnetflussbündelungselement eine zweite Längserstreckung aufweisen, welche sich insbesondere von einer Längserstreckung des überlappenden Magnetflussbündelungselements unterscheiden könnte. Die zweite Längserstreckung des zweiten überlappenden Magnetflussbündelungselements könnte insbesondere größer sein als die Längserstreckung des überlappenden Magnetflussbündelungselements. Alternativ könnte die zweite Längserstreckung des zweiten überlappenden Magnetflussbündelungselements insbesondere kleiner sein als die Längserstreckung des überlappenden Magnetflussbündelungselements. Insbesondere könnten die zweite Längserstreckung des zweiten überlappenden Magnetflussbündelungselements und die Längserstreckung des überlappenden Magnetflussbündelungselements wenigstens im Wesentlichen und insbesondere vollständig identisch sein. Unter einer "Längserstreckung" eines Objekts soll insbesondere eine Erstreckung des Objekts entlang einer Längserstreckungsrichtung des Objekts verstanden werden. Unter einer "Erstreckung" eines Objekts soll insbesondere ein maximaler Abstand zweier Punkte einer senkrechten Projektion des Objekts auf eine Ebene verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Dadurch kann ein von der Heizeinheit bereitgestellter magnetischer Fluss insbesondere optimal gebündelt werden.

Ferner wird vorgeschlagen, dass eine zweite Längsachse des zweiten überlappenden Magnetflussbündelungselements bei einer senkrechten Betrachtung der Heizeinheit auf die Haupterstreckungsebene mit der zweiten Hauptachse einen minimalen zweiten Winkel von mindestens 5°, insbesondere von mindestens 10°, vorteilhaft von mindestens 12° und vorzugsweise von mindestens 15° einschließt. Bei einer senkrechten Betrachtung der Heizeinheit auf die Haupterstreckungsebene schließt das zweite überlappende Magnetflussbündelungselement mit der zweiten Hauptachse insbesondere einen minimalen zweiten Winkel von maximal 40°, insbesondere von maximal 35°, vorteilhaft von maximal 32° und vorzugsweise von maximal 30° ein. Dadurch kann insbesondere eine über einen gesamten Gargeschirrboden symmetrische und/oder gleichmäßige Flächenbeheizung ermöglicht werden, da insbesondere eine Entstehung von Hotspots entlang der Hauptachsen gezielt vermieden werden kann.

Beispielsweise könnten der Winkel und der zweite Winkel wenigstens im Wesentlichen und insbesondere vollständig identisch sein. Alternativ könnte der zweite Winkel kleiner sein als der Winkel. Vorzugsweise ist der zweite Winkel größer als der Winkel. Dadurch können insbesondere Hotspots entlang beider Hauptachsen minimiert und/oder eine optimierte Wärmeverteilung kann erzielt werden, und zwar insbesondere in einem Fall, in welchem eine Erstreckung der Heizeinheit entlang der zweiten Hauptachse kleiner ist als eine Erstreckung der Heizeinheit entlang der ersten Hauptachse.

Weiterhin wird vorgeschlagen, dass das überlappende Magnetflussbündelungselement bei einer senkrechten Betrachtung der Heizeinheit auf die Haupterstreckungsebene einen Abstand zu einem Schnittpunkt der Hauptachsen von mindestens 5 mm, insbesondere von mindestens 10 mm, vorteilhaft von mindestens 15 mm und vorzugsweise von mindestens 20 mm aufweist. Insbesondere liegt der Schnittpunkt der Hauptachsen bei einer senkrechten Betrachtung der Heizeinheit auf die Haupterstreckungsebene in einem Mittelpunkt und/oder Schwerpunkt der Heizeinheit. Bei einer senkrechten Betrachtung der Heizeinheit auf die Haupterstreckungsebene weist das überlappende Magnetflussbündelungselement insbesondere einen Abstand zu einem Schnittpunkt der Hauptachsen von maximal 70 mm, insbesondere von maximal 50 mm, vorteilhaft von maximal 40 mm und vorzugsweise von maximal 35 mm auf. Bei einer senkrechten Betrachtung der Heizeinheit auf die Haupterstreckungsebene ist der Abstand insbesondere parallel zu einer Längsachse des überlappenden Magnetflussbündelungselements und/oder wenigstens im Wesentlichen senkrecht zu zumindest einer Kante einer Gestalt des überlappenden Magnetflussbündelungselements ausgerichtet. Dadurch kann insbesondere eine hohe Flexibilität hinsichtlich einer Anordnung des überlappenden Magnetflussbündelungselements ermöglicht werden, und zwar insbesondere in Bezug auf eine gegebene Gestalt des im Wesentlichen polygonalen äußeren Heizelements.

Ferner wird vorgeschlagen, dass das zweite überlappende Magnetflussbündelungselement bei einer senkrechten Betrachtung der Heizeinheit auf die Haupterstreckungsebene einen zweiten Abstand zu einem Schnittpunkt der Hauptachsen von mindestens 2,5 mm, insbesondere von mindestens 5 mm, vorteilhaft von mindestens 10 mm und vorzugsweise von mindestens 15 mm aufweist. Bei einer senkrechten Betrachtung der Heizeinheit auf die Haupterstreckungsebene weist das zweite überlappende Magnetflussbündelungselement insbesondere einen zweiten Abstand zu einem Schnittpunkt der Hauptachsen von maximal 50 mm, insbesondere von maximal 40 mm, vorteilhaft von maximal 30 mm und vorzugsweise von maximal 25 mm auf. Beispielsweise könnten der Abstand und der zweite Abstand wenigstens im Wesentlichen und insbesondere vollständig identisch sein. Alternativ könnte der Abstand kleiner sein als der zweite Abstand. Besonders vorteilhaft ist der Abstand größer als der zweite Abstand. Bei einer senkrechten Betrachtung der Heizeinheit auf die Haupterstreckungsebene ist der zweite Abstand insbesondere parallel zu einer zweiten Längsachse des zweiten überlappenden Magnetflussbündelungselements und/oder wenigstens im Wesentlichen senkrecht zu zumindest einer Kante einer Gestalt des zweiten überlappenden Magnetflussbündelungselements ausgerichtet. Dadurch kann beheiztes Gargeschirr insbesondere besonders vorteilhaft und/oder gleichmäßig erhitzt werden, wodurch insbesondere besonders vorteilhafte Garergebnisse erzielt werden können.

Eine Längsachse des überlappenden Magnetflussbündelungselements und/oder eine zweite Längsachse des zweiten überlappenden Magnetflussbündelungselements könnten beispielsweise durch den Schnittpunkt der Hauptachsen verlaufen. Erfindungsgemäß ist eine Längsachse des überlappenden Magnetflussbündelungselements und/oder eine zweite Längsachse des zweiten überlappenden Magnetflussbündelungselements bei einer senkrechten Betrachtung der Heizeinheit auf die Haupterstreckungsebene von einem Schnittpunkt der Hauptachsen beabstandet, und zwar insbesondere in einer parallel zu zumindest einer der Hauptachsen ausgerichteten Richtung. Insbesondere ist eine Längsachse des überlappenden Magnetflussbündelungselements bei einer senkrechten Betrachtung der Heizeinheit auf die Haupterstreckungsebene um mindestens 0,1 mm, insbesondere um mindestens 0,2 mm, vorteilhaft um mindestens 0,5 mm, besonders vorteilhaft um mindestens 1 mm und vorzugsweise um mindestens 2 mm von einem Schnittpunkt der Hauptachsen beabstandet. Bei einer senkrechten Betrachtung der Heizeinheit auf die Haupterstreckungsebene ist eine Längsachse des überlappenden Magnetflussbündelungselements um maximal 25 mm, insbesondere um maximal 20 mm, vorteilhaft um maximal 15 mm, besonders vorteilhaft um maximal 12 mm und vorzugsweise um maximal 10 mm von einem Schnittpunkt der Hauptachsen beabstandet. Insbesondere ist eine zweite Längsachse des zweiten überlappenden Magnetflussbündelungselements bei einer senkrechten Betrachtung der Heizeinheit auf die Haupterstreckungsebene um mindestens 0,1 mm, insbesondere um mindestens 0,2 mm, vorteilhaft um mindestens 0,5 mm, besonders vorteilhaft um mindestens 1 mm und vorzugsweise um mindestens 2 mm von einem Schnittpunkt der Hauptachsen beabstandet. Bei einer senkrechten Betrachtung der Heizeinheit auf die Haupterstreckungsebene ist eine zweite Längsachse des zweiten überlappenden Magnetflussbündelungselements um maximal 25 mm, insbesondere um maximal 20 mm, vorteilhaft um maximal 15 mm, besonders vorteilhaft um maximal 12 mm und vorzugsweise um maximal 10 mm von einem Schnittpunkt der Hauptachsen beabstandet. Dadurch können bei einer Anordnung des überlappenden Magnetflussbündelungselements insbesondere kleinere Korrekturen vorgenommen werden, wodurch insbesondere eine gezielte Optimierung einer Reduktion von Hotspots erfolgen kann.

Zumindest eines der Heizelemente könnte bei einer senkrechten Betrachtung der Heizeinheit auf die Haupterstreckungsebene beispielsweise eine wenigstens im Wesentlichen symmetrische Gestalt aufweisen, welche insbesondere frei von eindeutigen Haupterstreckungsrichtungen sein könnte. Beispielsweise könnte zumindest eines der Heizelemente bei einer senkrechten Betrachtung der Heizeinheit auf die Haupterstreckungsebene eine wenigstens im Wesentlichen quadratische und/oder eine wenigstens im Wesentlichen kreisförmige Gestalt aufweisen. Vorzugsweise weist zumindest eines der Heizelemente eine insbesondere eindeutige Haupterstreckungsrichtung auf, welche wenigstens im Wesentlichen parallel zu der ersten Hauptachse ausgerichtet ist. Unter einer "Haupterstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Insbesondere ist die längste Seite des kleinsten gedachten geometrischen Quaders größer als beide senkrecht zu der längsten Seite ausgerichteten Seiten des Quaders. Das Heizelement, welches die insbesondere eindeutige Haupterstreckungsrichtung aufweist, weist insbesondere eine Längserstreckung auf, welche insbesondere größer ist als senkrecht zu der Längserstreckung ausgerichtete Erstreckungen des Heizelements. Unter "wenigstens im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere eine hohe Flexibilität hinsichtlich einer Ausgestaltung der Heizelemente erzielt werden. Insbesondere können längliche Gargeschirre besonders vorteilhaft erhitzt werden.

Das überlappende Magnetflussbündelungselement und/oder das zweite überlappende Magnetflussbündelungselement könnte bei einer senkrechten Betrachtung der Heizeinheit auf die Haupterstreckungsebene eine wenigstens im Wesentlichen rechteckige Gestalt aufweisen. Vorzugsweise weist das überlappende Magnetflussbündelungselement und/oder das zweite überlappende Magnetflussbündelungselement bei einer senkrechten Betrachtung der Heizeinheit auf die Haupterstreckungsebene eine wenigstens im Wesentlichen konische Gestalt auf, welche sich insbesondere ausgehend von einem Mittelpunkt und/oder Schwerpunkt des überlappenden Magnetflussbündelungselements in Richtung eines dem Schnittpunkt der Hauptachsen zugewandten Bereichs verjüngt. Dadurch kann insbesondere eine hohe Gestaltungsfreiheit erzielt werden. Insbesondere können die Magnetflussbündelungselemente näher an einem Schwerpunkt und/oder Mittelpunkt der Heizeinheit platziert werden, und zwar insbesondere ohne dass sich benachbart zueinander angeordnete Magnetflussbündelungselemente überlagern und/oder beeinflussen.

Beispielsweise könnte die Magnetflussbündelungseinheit zumindest ein drittes Magnetflussbündelungselement aufweisen, welches insbesondere genau einem der Heizelemente zugeordnet sein könnte. Vorzugsweise weist die Magnetflussbündelungseinheit ausschließlich überlappende Magnetflussbündelungselemente auf, wodurch insbesondere eine geringe Lagerhaltung und/oder eine gleichmäßige Flächenbeheizung ermöglicht werden kann. Vorzugsweise weist das Gargerät ausschließlich überlappende Magnetflussbündelungselemente auf.

Die Gargerätevorrichtung soll hierbei nicht auf die oben beschriebene Anwendung und Ausführungsform beschränkt sein. Insbesondere kann die Gargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Gargerät mit einer Gargerätevorrichtung in einer schematischen Draufsicht,
- Fig. 2: eine Heizeinheit und eine Magnetflussbündelungseinheit der Gargerätevorrichtung aus Fig. 1 in einer schematischen Draufsicht,
- Fig. 3: die Magnetflussbündelungseinheit in einer schematischen Draufsicht,
- Fig. 4: ein Ergebnis einer Simulation von Leistungsverlusten bei einer Beheizung eines durch die Heizeinheit beheizten Gargeschirrbodens in einer schematischen Darstellung,
- Fig. 5: eine Heizeinheit und eine Magnetflussbündelungseinheit einer alternativen Gargerätevorrichtung in einer schematischen Draufsicht,
- Fig. 6: die Magnetflussbündelungseinheit aus Fig. 5 in einer schematischen Draufsicht,
- Fig. 7: ein Ergebnis einer Simulation von Leistungsverlusten bei einer Beheizung eines durch die Heizeinheit beheizten Gargeschirrbodens in einer schematischen Darstellung,
- Fig. 8: eine Heizeinheit und eine Magnetflussbündelungseinheit einer alternativen Gargerätevorrichtung in einer schematischen Draufsicht,
- Fig. 9: die Heizeinheit und die Magnetflussbündelungseinheit aus Fig. 8 in einer stark vereinfachten schematischen Draufsicht,
- Fig. 10: ein Ergebnis einer Simulation von Leistungsverlusten bei einer Beheizung eines durch die Heizeinheit beheizten Gargeschirrbodens in einer schematischen Darstellung und
- Fig. 11: eine Heizeinheit und eine Magnetflussbündelungseinheit einer alternativen Gargerätevorrichtung in einer schematischen Draufsicht.

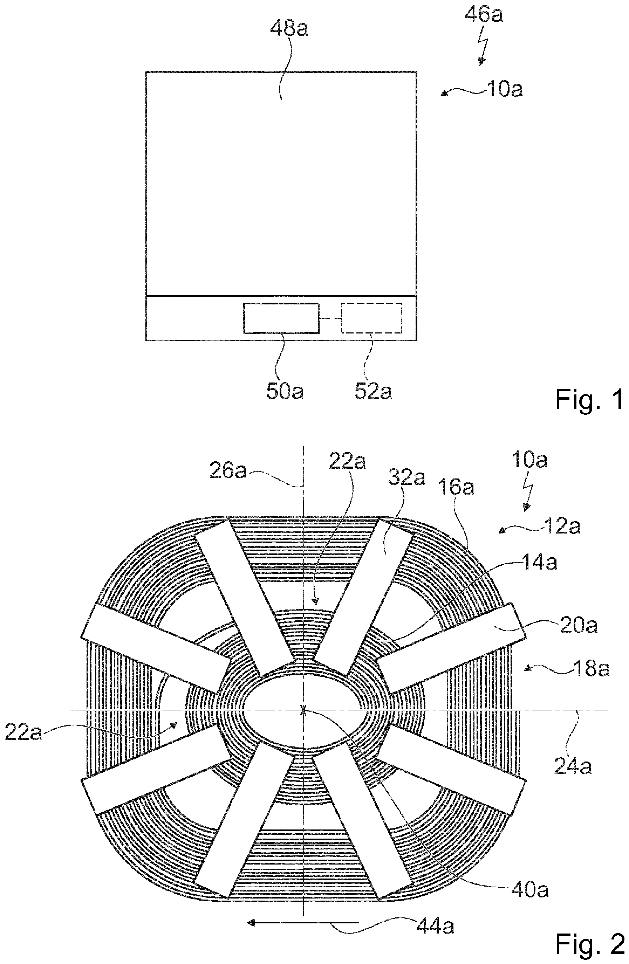

Fig. 1 zeigt ein Gargerät 46a, welches als ein Induktionsgargerät ausgebildet ist, mit einer Gargerätevorrichtung 10a, welche als eine Induktionsgargerätevorrichtung ausgebildet ist. Beispielsweise könnte das Gargerät 46a als ein Grillgerät und/oder als ein Dampfgargerät und/oder als ein Mikrowellengerät und/oder als ein Backofen ausgebildet sein. Im vorliegenden Ausführungsbeispiel ist das Gargerät 46a als ein Kochfeld, und zwar insbesondere als ein Induktionskochfeld, ausgebildet. Die Gargerätevorrichtung 10a ist als eine Kochfeldvorrichtung, und zwar insbesondere als eine Induktionskochfeldvorrichtung, ausgebildet.

Die Gargerätevorrichtung 10a weist eine Geräteplatte 48a auf. Im vorliegenden Ausführungsbeispiel ist die Geräteplatte 48a als eine Kochfeldplatte ausgebildet. In einem montierten Zustand bildet die Geräteplatte 48a einen Teil eines Geräteaußengehäuses, insbesondere des Gargeräts 46a, aus. Die Geräteplatte 48a bildet in einer Einbaulage einen einem Bediener zugewandten Teil des Geräteaußengehäuses aus. In einem montierten Zustand ist die Geräteplatte 48a zu einem Aufstellen von Gargeschirr vorgesehen (nicht dargestellt).

Die Gargerätevorrichtung 10a weist eine Bedienerschnittstelle 50a zu einer Eingabe und/oder Auswahl von Betriebsparametern (vgl. Fig. 1), beispielsweise einer Heizleistung und/oder einer Heizleistungsdichte und/oder einer Heizzone, auf. Die Bedienerschnittstelle 50a ist zu einer Ausgabe eines Werts eines Betriebsparameters an einen Bediener vorgesehen. Beispielsweise könnte die Bedienerschnittstelle 50a den Wert des Betriebsparameters an einen Bediener optisch und/oder akustisch ausgeben.

Die Gargerätevorrichtung 10a weist eine Steuereinheit 52a auf. Die Steuereinheit 52a ist dazu vorgesehen, in Abhängigkeit von mittels der Bedienerschnittstelle 50a eingegebenen Betriebsparametern Aktionen auszuführen und/oder Einstellungen zu verändern.

Die Gargerätevorrichtung 10a weist mehrere Heizeinheiten 12a auf, von welchen lediglich eine dargestellt ist (vgl. Fig. 2). Die Heizeinheiten 12a sind im Wesentlichen identisch ausgebildet, weshalb im Folgenden lediglich eine der Heizeinheiten 12a beschrieben wird.

Die Heizeinheit 12a weist ein inneres Heizelement 14a und ein im Wesentlichen polygonales äußeres Heizelement 16a auf (vgl. Fig. 2). Die Heizelemente 14a, 16a weisen jeweils eine Haupterstreckungsebene auf. Die Haupterstreckungsebene des inneren Heizelements 14a und die Haupterstreckungsebene des äußeren Heizelements 16a sind im vorliegenden Ausführungsbeispiel im Wesentlichen parallel zueinander ausgerichtet. Im Folgenden wird lediglich eine der Haupterstreckungsebenen beschrieben.

Das innere Heizelement 14a weist eine insbesondere eindeutige Haupterstreckungsrichtung 44a auf. Das innere Heizelement 14a weist eine eindeutige Längserstreckung auf. Die Längserstreckung des inneren Heizelements 14a ist zu der Haupterstreckungsrichtung 44a des inneren Heizelements 14a im Wesentlichen parallel ausgerichtet. Das innere Heizelement 14a weist im vorliegenden Ausführungsbeispiel eine im Wesentlichen ovale und insbesondere ellipsenförmige Gestalt auf.

Das äußere Heizelement 16a weist eine insbesondere eindeutige Haupterstreckungsrichtung 44a auf. Das äußere Heizelement 16a weist eine eindeutige Längserstreckung auf. Die Längserstreckung des äußeren Heizelements 16a ist zu der Haupterstreckungsrichtung 44a des äußeren Heizelements 16a im Wesentlichen parallel ausgerichtet. Das äußere Heizelement 16a weist im vorliegenden Ausführungsbeispiel eine im Wesentlichen rechteckige Gestalt auf.

Die Haupterstreckungsrichtung 44a des inneren Heizelements 14a und die Haupterstreckungsrichtung 44a des äußeren Heizelements 16a sind im Wesentlichen parallel zueinander ausgerichtet. Daher wird im Folgenden lediglich eine der Haupterstreckungsrichtungen 44a beschrieben. Die Heizelemente 14a, 16a weisen jeweils eine eindeutige Längserstreckung auf, die zu der Haupterstreckungsrichtung 44a im Wesentlichen parallel ausgerichtet ist.

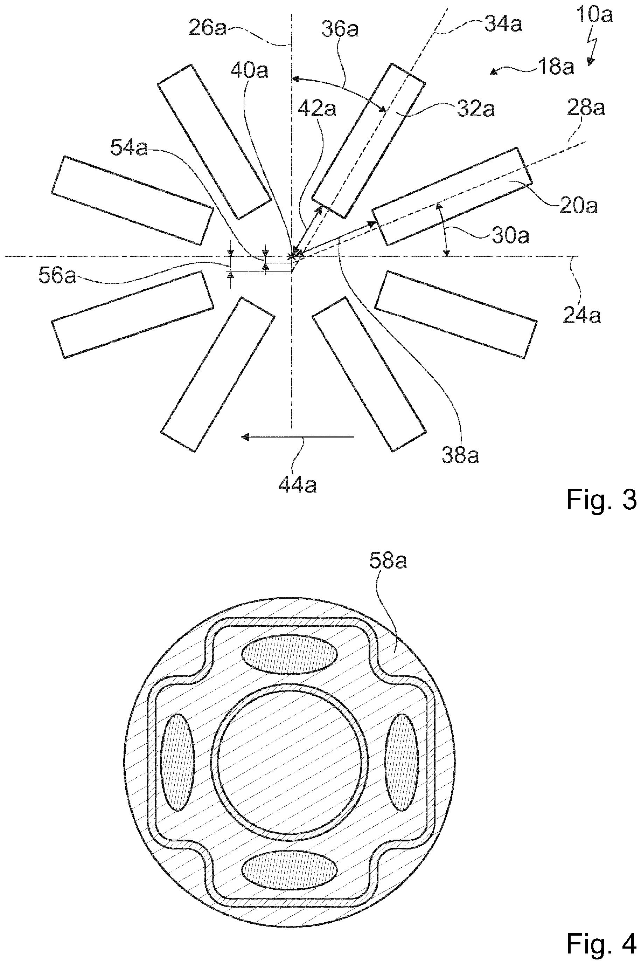

Die Gargerätevorrichtung 10a weist, insbesondere pro Heizeinheit 12a, eine Magnetflussbündelungseinheit 18a auf (vgl. Fig. 2 und 3). Die Magnetflussbündelungseinheit 18a ist der Heizeinheit 12a zugeordnet. In einem Betriebszustand bündelt die Magnetflussbündelungseinheit 18a einen durch die Heizeinheit 12a bereitgestellten magnetischen Fluss. Die Magnetflussbündelungseinheit 18a ist zu einer Bündelung eines durch die Heizeinheit 12a bereitgestellten magnetischen Flusses vorgesehen.

Im vorliegenden Ausführungsbeispiel weist die Magnetflussbündelungseinheit 18a vier überlappende Magnetflussbündelungselemente 20a auf. Von mehrfach vorhandenen Objekten ist in den Figuren jeweils lediglich eines mit einem Bezugszeichen versehen. Alternativ könnte die Magnetflussbündelungseinheit 18a eine geringere Anzahl an überlappenden Magnetflussbündelungselementen 20a aufweisen, wie beispielsweise zumindest zwei oder zumindest drei überlappende Magnetflussbündelungselemente 20a. Die Magnetflussbündelungseinheit 18a könnte alternativ eine größere Anzahl an überlappenden Magnetflussbündelungselementen 20a aufweisen, wie beispielsweise zumindest sechs oder zumindest acht überlappende Magnetflussbündelungselemente 20a. Die überlappenden Magnetflussbündelungselemente 20a sind im Wesentlichen identisch ausgebildet, weshalb im Folgenden lediglich eines der überlappenden Magnetflussbündelungselemente 20a beschrieben wird.

Das überlappende Magnetflussbündelungselement 20a ist bei einer senkrechten Betrachtung der Heizeinheit 12a auf die Haupterstreckungsebene überlappend über die Heizelemente 14a, 16a angeordnet. Das überlappende Magnetflussbündelungselement 20a ist dem inneren Heizelement 14a und dem äußeren Heizelement 16a zugeordnet.

Neben dem überlappenden Magnetflussbündelungselement 20a weist die Magnetflussbündelungseinheit 18a im vorliegenden Ausführungsbeispiel vier zweite überlappende Magnetflussbündelungselemente 32a auf. Alternativ könnte die Magnetflussbündelungseinheit 18a eine geringere Anzahl an zweiten überlappenden Magnetflussbündelungselementen 32a aufweisen, wie beispielsweise zumindest zwei oder zumindest drei zweite überlappende Magnetflussbündelungselemente 32a. Die Magnetflussbündelungseinheit 18a könnte alternativ eine größere Anzahl an zweiten überlappenden Magnetflussbündelungselementen 32a aufweisen, wie beispielsweise zumindest sechs oder zumindest acht zweite überlappende Magnetflussbündelungselemente 32a. Die zweiten überlappenden Magnetflussbündelungselemente 32a sind im Wesentlichen identisch ausgebildet, weshalb im Folgenden lediglich eines der zweiten überlappenden Magnetflussbündelungselemente 32a beschrieben wird.

Bei einer senkrechten Betrachtung der Heizeinheit 12a auf die Haupterstreckungsebene sind Bereiche 22a minimalen Abstands zwischen den Heizelementen 14a, 16a frei von überlappenden Magnetflussbündelungselementen 20a, 32a. Im vorliegenden Ausführungsbeispiel sind bei einer senkrechten Betrachtung der Heizeinheit 12a auf die Haupterstreckungsebene Bereiche 22a minimalen Abstands zwischen den Heizelementen 14a, 16a frei von jeglichen Magnetflussbündelungselementen 20a, 32a.

Die Bereiche 22a minimalen Abstands zwischen den Heizelementen 14a, 16a sind bei einer senkrechten Betrachtung der Heizeinheit 12a auf die Haupterstreckungsebene um eine erste Hauptachse 24a der Heizeinheit 12a und um eine zweite Hauptachse 26a der Heizeinheit 12a angeordnet.

Die erste Hauptachse 24a der Heizeinheit 12a ist bei einer senkrechten Betrachtung der Heizeinheit 12a auf die Haupterstreckungsebene im Wesentlichen senkrecht zu zwei Kanten der im Wesentlichen polygonalen Gestalt des äußeren Heizelements 16a ausgerichtet. Im vorliegenden Ausführungsbeispiel ist die erste Hauptachse 24a bei einer senkrechten Betrachtung der Heizeinheit 12a auf die Haupterstreckungsebene im Wesentlichen parallel zu der Haupterstreckungsrichtung 44a ausgerichtet.

Bei einer senkrechten Betrachtung der Heizeinheit 12a auf die Haupterstreckungsebene ist die zweite Hauptachse 26a der Heizeinheit 12a im Wesentlichen senkrecht zu zwei Kanten der im Wesentlichen polygonalen Gestalt des äußeren Heizelements 16a ausgerichtet. Die zweite Hauptachse 26a der Heizeinheit 12a ist bei einer senkrechten Betrachtung der Heizeinheit 12a auf die Haupterstreckungsebene im Wesentlichen senkrecht zu der ersten Hauptachse 24a ausgerichtet.

Bei einer senkrechten Betrachtung der Heizeinheit 12a auf die Haupterstreckungsebene sind Bereiche 22a um die erste Hauptachse 24a der Heizeinheit 12a und um die zweite Hauptachse 26a der Heizeinheit 12a frei von überlappenden Magnetflussbündelungselementen 20a, 32a. Im vorliegenden Ausführungsbeispiel sind bei einer senkrechten Betrachtung der Heizeinheit 12a auf die Haupterstreckungsebene Bereiche 22a um die erste Hauptachse 24a der Heizeinheit 12a und um die zweite Hauptachse 26a der Heizeinheit 12a frei von jeglichen Magnetflussbündelungselementen 20a, 32a.

Die erste Hauptachse 24a und die zweite Hauptachse 26a weisen bei einer senkrechten Betrachtung der Heizeinheit 12a auf die Haupterstreckungsebene einen Schnittpunkt 40a auf, der mit einem Mittelpunkt und/oder Schwerpunkt der Heizeinheit 12a zusammenfällt. Bei einer senkrechten Betrachtung der Heizeinheit 12a auf die Haupterstreckungsebene ist das zweite überlappende Magnetflussbündelungselement 32a gemeinsam mit dem überlappenden Magnetflussbündelungselement 20a innerhalb eines durch die Hauptachsen 24a, 26a aufgespannten Quadranten angeordnet.

Die erste Hauptachse 24a und die zweite Hauptachse 26a unterteilen bei einer senkrechten Betrachtung der Heizeinheit 12a auf die Haupterstreckungsebene die Heizeinheit 12a in vier Quadraten. Die Quadranten sind im vorliegenden Ausführungsbeispiel analog zueinander ausgebildet, weshalb im Folgenden lediglich einer der Quadranten beschrieben wird.

Das überlappende Magnetflussbündelungselement 20a weist eine Längsachse 28a auf. Die Längsachse 28a des überlappenden Magnetflussbündelungselements 20a schließt im vorliegenden Ausführungsbeispiel bei einer senkrechten Betrachtung der Heizeinheit 12a auf die Haupterstreckungsebene mit der ersten Hauptachse 24a einen minimalen Winkel 30a von im Wesentlichen 22,5° ein.

Das zweite überlappende Magnetflussbündelungselement 32a weist eine zweite Längsachse 34a auf. Die zweite Längsachse 34a des zweiten überlappenden Magnetflussbündelungselements 32a schließt im vorliegenden Ausführungsbeispiel bei einer senkrechten Betrachtung der Heizeinheit 12a auf die Haupterstreckungsebene mit der zweiten Hauptachse 26a einen minimalen zweiten Winkel 36a von im Wesentlichen 25° ein. Der zweite Winkel 36a ist größer als der Winkel 30a.

Bei einer senkrechten Betrachtung der Heizeinheit 12a auf die Haupterstreckungsebene weist das überlappende Magnetflussbündelungselement 20a im vorliegenden Ausführungsbeispiel einen Abstand 38a zu dem Schnittpunkt 40a der Hauptachsen 24a, 26a von im Wesentlichen 29,1 mm auf. Das zweite überlappende Magnetflussbündelungselement 32a weist im vorliegenden Ausführungsbeispiel bei einer senkrechten Betrachtung der Heizeinheit 12a auf die Haupterstreckungsebene einen zweiten Abstand 42a zu dem Schnittpunkt 40a der Hauptachsen 24a, 26a von im Wesentlichen 17,6 mm auf. Der Abstand 38a ist größer als der zweite Abstand 42a.

Die Längsachse 28a des überlappenden Magnetflussbündelungselements 20a ist bei einer senkrechten Betrachtung der Heizeinheit 12a auf die Haupterstreckungsebene von dem Schnittpunkt 40a der Hauptachsen 24a, 26a beabstandet. Im vorliegenden Ausführungsbeispiel ist die Längsachse 28a des überlappenden Magnetflussbündelungselements 20a bei einer senkrechten Betrachtung der Heizeinheit 12a auf die Haupterstreckungsebene von dem Schnittpunkt 40a der Hauptachsen 24a, 26a um eine Strecke 54a von im Wesentlichen 1,5 mm beabstandet.

Die zweite Längsachse 34a des zweiten überlappenden Magnetflussbündelungselements 32a ist bei einer senkrechten Betrachtung der Heizeinheit 12a auf die Haupterstreckungsebene von dem Schnittpunkt 40a der Hauptachsen 24a, 26a beabstandet. Im vorliegenden Ausführungsbeispiel ist die zweite Längsachse 34a des zweiten überlappenden Magnetflussbündelungselements 32a bei einer senkrechten Betrachtung der Heizeinheit 12a auf die Haupterstreckungsebene von dem Schnittpunkt 40a der Hauptachsen 24a, 26a um eine zweite Strecke 56a von im Wesentlichen 3 mm beabstandet. Die Strecke 54a ist kleiner als die zweite Strecke 56a. Alternativ könnte die Strecke 54a größer sein als die zweite Strecke 56a.

Eine Längserstreckung des überlappenden Magnetflussbündelungselements 20a ist im vorliegenden Ausführungsbeispiel kleiner als eine zweite Längserstreckung des zweiten überlappenden Magnetflussbündelungselements 32a.

Im vorliegenden Ausführungsbeispiel weist die Magnetflussbündelungseinheit 18a ausschließlich überlappende Magnetflussbündelungselemente 20a, 32a auf. Das überlappende Magnetflussbündelungselement 20a weist im vorliegenden Ausführungsbeispiel bei einer senkrechten Betrachtung der Heizeinheit 12a auf die Haupterstreckungsebene eine im Wesentlichen rechteckige Gestalt auf. Im vorliegenden Ausführungsbeispiel weist das zweite überlappende Magnetflussbündelungselement 32a bei einer senkrechten Betrachtung der Heizeinheit 12a auf die Haupterstreckungsebene eine im Wesentlichen rechteckige Gestalt auf.

Fig. 4 zeigt stark vereinfacht ein Ergebnis einer Simulation von Leistungsverlusten bei einer Beheizung eines durch die Heizeinheit 12a beheizten Gargeschirrbodens 58a. Je dichter eine Schraffur ausgestaltet ist, desto höher sind die Leistungsverluste in dem Bereich. Zu erkennen ist, dass Leistungsverluste im Wesentlichen gleichmäßig verteilt sind und dass insbesondere Hotspots, an welchen Leistungsverluste insbesondere besonders hoch sind, fehlen.

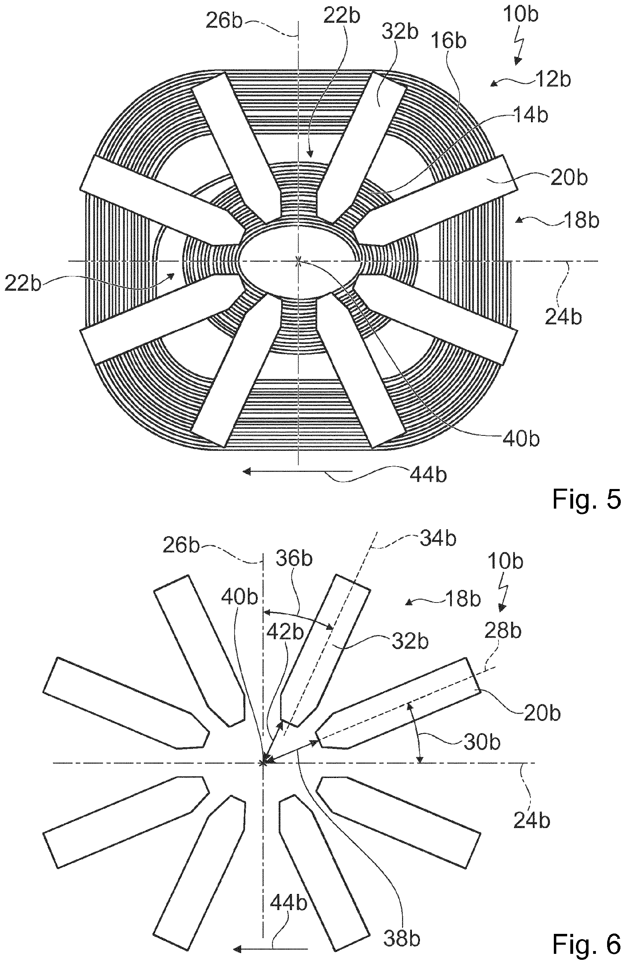

In Fig. 5 bis 11 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 4 verwiesen werden kann. Zur Unterscheidung der Ausführungsbeispiele ist der Buchstabe a in den Bezugszeichen des Ausführungsbeispiels in den Fig. 1 bis 4 durch die Buchstaben b bis d in den Bezugszeichen der Ausführungsbeispiele der Fig. 5 bis 11 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Fig. 1 bis 4 verwiesen werden.

Fig. 5 zeigt eine Heizeinheit 12b und eine Magnetflussbündelungseinheit 18b einer alternativen Gargerätevorrichtung 10b. Die Magnetflussbündelungseinheit 18b weist vier überlappende Magnetflussbündelungselemente 20b und vier zweite überlappende Magnetflussbündelungselemente 32b auf, von welchen im Folgenden jeweils lediglich eines beschrieben wird.

Das überlappende Magnetflussbündelungselement 20b weist im vorliegenden Ausführungsbeispiel bei einer senkrechten Betrachtung der Heizeinheit 12b auf eine Haupterstreckungsebene eines Heizelements 14b, 16b der Heizeinheit 12b eine im Wesentlichen konische Gestalt auf. Im vorliegenden Ausführungsbeispiel weist das zweite überlappende Magnetflussbündelungselement 32b bei einer senkrechten Betrachtung der Heizeinheit 12b auf die Haupterstreckungsebene eine im Wesentlichen konische Gestalt auf. Die konische Gestalt verjüngt sich in Richtung eines Schnittpunkts 40b von Hauptachsen 24b, 26b der Heizeinheit 12b.

Bei einer senkrechten Betrachtung der Heizeinheit 12b auf die Haupterstreckungsebene setzt sich die im Wesentlichen konische Gestalt aus einer im Wesentlichen rechteckigen Gestalt und einer im Wesentlichen trapezförmigen Gestalt zusammen, wobei die im Wesentlichen trapezförmige Gestalt insbesondere an einem dem Schnittpunkt 40b der Hauptachsen 24b, 26b der Heizeinheit 12b zugewandten Ende des entsprechenden Magnetflussbündelungselements 20b, 32b angeordnet ist.

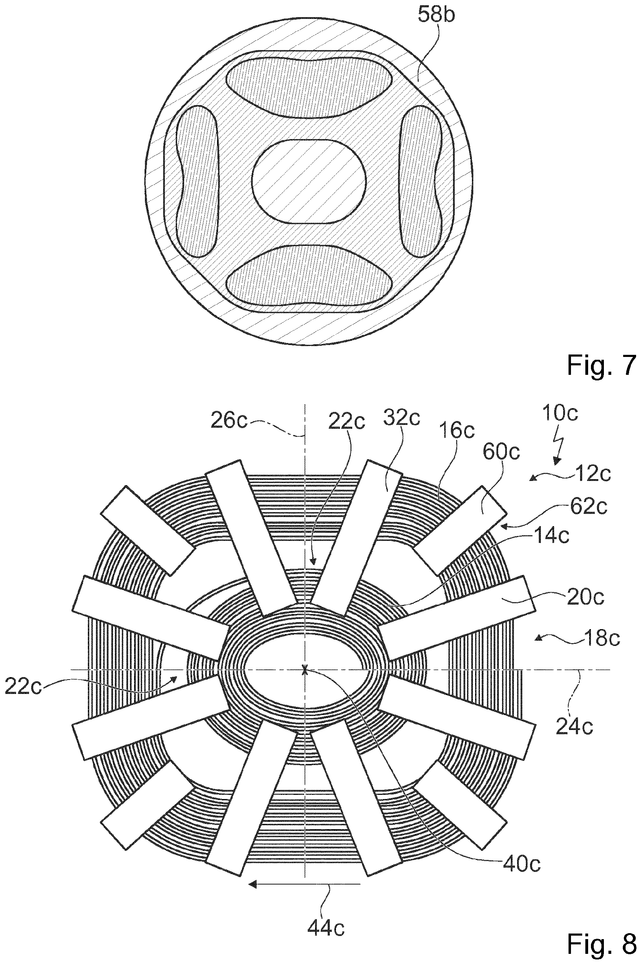

Fig. 7 zeigt stark vereinfacht ein Ergebnis einer Simulation von Leistungsverlusten bei einer Beheizung eines durch die Heizeinheit 12b beheizten Gargeschirrbodens 58b. Je dichter eine Schraffur ausgestaltet ist, desto höher sind die Leistungsverluste in dem Bereich. Zu erkennen ist, dass Leistungsverluste im Wesentlichen gleichmäßig verteilt sind und dass insbesondere Hotspots, an welchen Leistungsverluste insbesondere besonders hoch sind, fehlen.

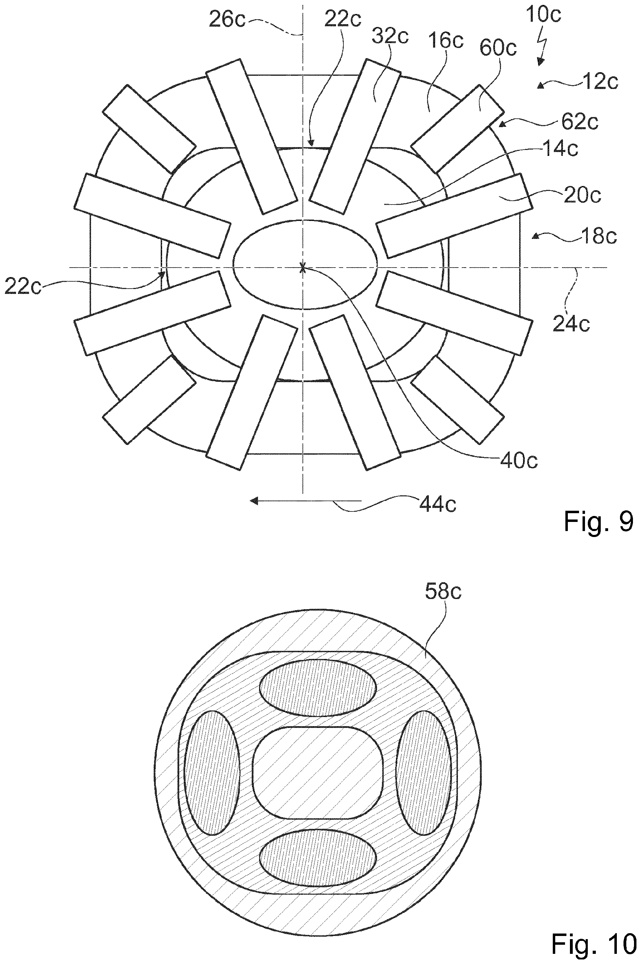

Fig. 8 und 9 zeigen jeweils eine Heizeinheit 12c und eine Magnetflussbündelungseinheit 18c einer alternativen Gargerätevorrichtung 10c. Die Magnetflussbündelungseinheit 18c weist vier überlappende Magnetflussbündelungselemente 20c und vier zweite überlappende Magnetflussbündelungselemente 32c auf, von welchen im Folgenden jeweils lediglich eines beschrieben wird.

Im vorliegenden Ausführungsbeispiel weist die Magnetflussbündelungseinheit 18c vier dritte Magnetflussbündelungselemente 60c auf. Jeweils eines der dritten Magnetflussbündelungselemente 60c ist bei einer senkrechten Betrachtung der Heizeinheit 12c auf eine Haupterstreckungsebene eines Heizelements 14c, 16c der Heizeinheit 12c in einem von Hauptachsen 24c, 26c der Heizeinheit 12c aufgespannten Quadranten angeordnet. Im Folgenden wird lediglich eines der dritten Magnetflussbündelungselemente 60c beschrieben.

Das dritte Magnetflussbündelungselement 60c ist bei einer senkrechten Betrachtung der Heizeinheit 12c auf die Haupterstreckungsebene in einem Eckbereich 62c einer im Wesentlichen polygonalen Gestalt des äußeren Heizelement 16c angeordnet. Im vorliegenden Ausführungsbeispiel ist das dritte Magnetflussbündelungselement 60c dem äußeren Heizelement 16c zugeordnet. Bei einer senkrechten Betrachtung der Heizeinheit 12c auf die Haupterstreckungsebene ist das dritte Magnetflussbündelungselement 60c in einem von dem äußeren Heizelement 16c aufgespannten Flächenbereich angeordnet und ist insbesondere beabstandet zu einem von dem inneren Heizelement 14c aufgespannten Flächenbereich angeordnet.

Fig. 10 zeigt stark vereinfacht ein Ergebnis einer Simulation von Leistungsverlusten bei einer Beheizung eines durch die Heizeinheit 12c beheizten Gargeschirrbodens 58c. Je dichter eine Schraffur ausgestaltet ist, desto höher sind die Leistungsverluste in dem Bereich. Zu erkennen ist, dass Leistungsverluste im Wesentlichen gleichmäßig verteilt sind und dass insbesondere Hotspots, an welchen Leistungsverluste insbesondere besonders hoch sind, fehlen.

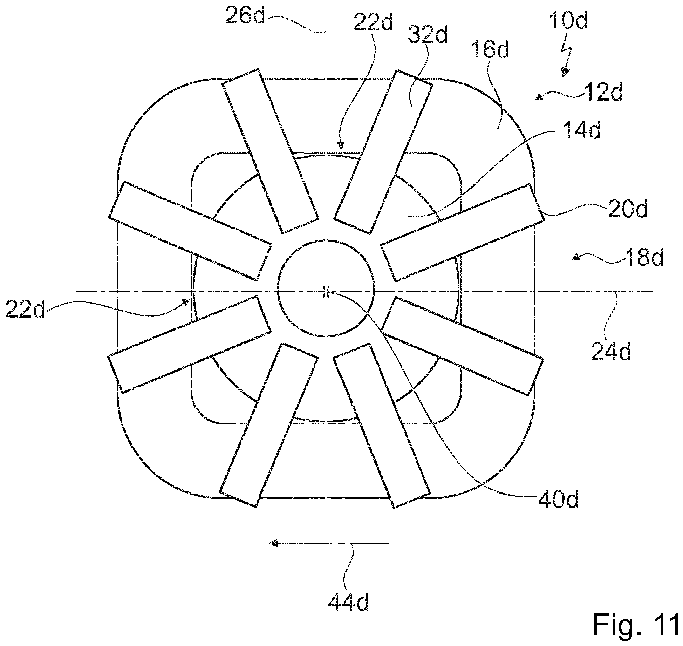

Fig. 11 zeigt eine Heizeinheit 12d und eine Magnetflussbündelungseinheit 18d einer alternativen Gargerätevorrichtung 10d. Die Heizeinheit 12d weist ein inneres Heizelement 14d und ein wenigstens im Wesentlichen polygonales äußeres Heizelement 16d auf. Das innere Heizelement 14d weist im vorliegenden Ausführungsbeispiel eine im Wesentlichen kreisförmige Gestalt auf.

Das innere Heizelement 14d weist bei einer senkrechten Betrachtung der Heizeinheit 12d auf eine Haupterstreckungsebene eines der Heizelemente 14d, 16d im vorliegenden Ausführungsbeispiel eine im Wesentlichen kreisförmige Gestalt auf. Das äußere Heizelement 16d weist bei einer senkrechten Betrachtung der Heizeinheit 12d auf die Haupterstreckungsebene im vorliegenden Ausführungsbeispiel eine im Wesentlichen quadratische Gestalt auf.

### Bezugszeichen

- 10: Gargerätevorrichtung
- 12: Heizeinheit
- 14: Inneres Heizelement
- 16: Äußeres Heizelement
- 18: Magnetflussbündelungseinheit
- 20: Überlappendes Magnetflussbündelungselement
- 22: Bereich
- 24: Erste Hauptachse
- 26: Zweite Hauptachse
- 28: Längsachse
- 30: Winkel
- 32: Zweites überlappendes Magnetflussbündelungselement
- 34: Zweite Längsachse
- 36: Zweiter Winkel
- 38: Abstand
- 40: Schnittpunkt
- 42: Zweiter Abstand
- 44: Haupterstreckungsrichtung
- 46: Gargerät
- 48: Geräteplatte
- 50: Bedienerschnittstelle
- 52: Steuereinheit
- 54: Strecke
- 56: Zweite Strecke
- 58: Gargeschirrboden
- 60: Drittes Magnetflussbündelungselement
- 62: Eckbereich

## Patentansprüche

1. Gargerätevorrichtung, insbesondere Kochfeldvorrichtung, mit zumindest einer Heizeinheit (12a-d), welche zumindest ein inneres Heizelement (14a-d) und zumindest ein wenigstens im Wesentlichen polygonales äußeres Heizelement (16a-d) aufweist, wobei zumindest eines der Heizelemente (14a-d, 16a-d) eine Haupterstreckungsebene aufweist, und mit zumindest einer Magnetflussbündelungseinheit (18a-d), welche zu einer Bündelung eines durch die Heizeinheit (12a-d) bereitgestellten magnetischen Flusses vorgesehen ist und welche zumindest ein überlappendes Magnetflussbündelungselement (20a-d) aufweist, welches bei einer senkrechten Betrachtung der Heizeinheit (12a-d) auf die Haupterstreckungsebene überlappend über die Heizelemente (14a-d, 16a-d) angeordnet ist, wobei bei einer senkrechten Betrachtung der Heizeinheit (12a-d) auf die Haupterstreckungsebene Bereiche (22a-d) minimalen Abstands zwischen den Heizelementen (14a-d, 16a-d) frei von überlappenden Magnetflussbündelungselementen (20a-d, 32a-d) sind, und wobei bei einer senkrechten Betrachtung der Heizeinheit (12a-d) auf die Haupterstreckungsebene Bereiche (22a-d) um zumindest eine erste Hauptachse (24a-d) der Heizeinheit (12a-d), die wenigstens im Wesentlichen senkrecht zu zumindest einer Kante der wenigstens im Wesentlichen polygonalen Gestalt des äußeren Heizelements (16a-d) ausgerichtet ist, und um zumindest eine zweite Hauptachse (26a-d) der Heizeinheit (12a-d), die wenigstens im Wesentlichen senkrecht zu der ersten Hauptachse (24a-d) ausgerichtet ist, frei von überlappenden Magnetflussbündelungselementen (20a-d, 32a-d) sind, **dadurch gekennzeichnet, dass** eine Längsachse (28a-d) des überlappenden Magnetflussbündelungselements (20a-d) bei einer senkrechten Betrachtung der Heizeinheit (12a-d) auf die Haupterstreckungsebene von einem Schnittpunkt (40a-d) der Hauptachsen (24a-d, 26a-d) beabstandet ist.

2. Gargerätevorrichtung nach Anspruch 1, **dadurch gekennzeichnet, dass** eine Längsachse (28a-d) des überlappenden Magnetflussbündelungselements (20a-d) bei einer senkrechten Betrachtung der Heizeinheit (12a-d) auf die Haupterstreckungsebene mit der ersten Hauptachse (24a-d) einen minimalen Winkel (30a-d) von mindestens 5° einschließt.

3. Gargerätevorrichtung nach Anspruch 1 oder 2, **dadurch gekennzeichnet, dass** die Magnetflussbündelungseinheit (18a-d) zumindest ein zweites überlappendes Magnetflussbündelungselement (32a-d) aufweist, welches bei einer senkrechten Betrachtung der Heizeinheit (12a-d) auf die Haupterstreckungsebene gemeinsam mit dem überlappenden Magnetflussbündelungselement (20a-d) innerhalb eines durch die Hauptachsen (24a-d, 26a-d) aufgespannten Quadranten angeordnet ist.

4. Gargerätevorrichtung nach Anspruch 3, **dadurch gekennzeichnet, dass** eine zweite Längsachse (34a-d) des zweiten überlappenden Magnetflussbündelungselements (32a-d) bei einer senkrechten Betrachtung der Heizeinheit (12a-d) auf die Haupterstreckungsebene mit der zweiten Hauptachse (26a-d) einen minimalen zweiten Winkel (36a-d) von mindestens 5° einschließt.

5. Gargerätevorrichtung zumindest nach den Ansprüchen 2 und 4, **dadurch gekennzeichnet, dass** der zweite Winkel (36a-d) größer ist als der Winkel (30a-d).

6. Gargerätevorrichtung nach einem der vorhergehenden Ansprüche, **dadurch gekennzeichnet, dass** das überlappende Magnetflussbündelungselement (20a-d) bei einer senkrechten Betrachtung der Heizeinheit (12a-d) auf die Haupterstreckungsebene einen Abstand (38a-d) zu einem Schnittpunkt (40a-d) der Hauptachsen (24a-d, 26a-d) von mindestens 5 mm aufweist.

7. Gargerätevorrichtung zumindest nach Anspruch 3, **dadurch gekennzeichnet, dass** das zweite überlappende Magnetflussbündelungselement (32a-d) bei einer senkrechten Betrachtung der Heizeinheit (12a-d) auf die Haupterstreckungsebene einen zweiten Abstand (42a-d) zu einem Schnittpunkt (40a-d) der Hauptachsen (24a-d, 26a-d) von mindestens 2,5 mm aufweist.

8. Gargerätevorrichtung nach einem der vorhergehenden Ansprüche, **dadurch gekennzeichnet, dass** zumindest eines der Heizelemente (14a-d, 16a-d) eine Haupterstreckungsrichtung (44a-d) aufweist, welche wenigstens im Wesentlichen parallel zu der ersten Hauptachse (24a-d) ausgerichtet ist.

9. Gargerätevorrichtung nach einem der vorhergehenden Ansprüche, **dadurch gekennzeichnet, dass** das überlappende Magnetflussbündelungselement (20b) bei einer senkrechten Betrachtung der Heizeinheit (12b) auf die Haupterstreckungsebene eine wenigstens im Wesentlichen konische Gestalt aufweist.

10. Gargerätevorrichtung nach einem der vorhergehenden Ansprüche, **dadurch gekennzeichnet, dass** die Magnetflussbündelungseinheit (18a-b; 18d) ausschließlich überlappende Magnetflussbündelungselemente (20a, 32a; 20b, 32b; 20d, 32d) aufweist.

11. Gargerät, insbesondere Kochfeld, mit zumindest einer Gargerätevorrichtung (10a-d) nach einem der vorhergehenden Ansprüche.

## Claims

1. Cooking appliance apparatus, in particular hob apparatus, with at least one heating unit (12a-d), which has at least one inner heating element (14a-d) and at least one at least substantially polygonal outer heating element (16a-d), wherein at least one of the heating elements (14a-d, 16a-d) has a main extension plane, and with at least one magnetic flux bundling unit (18a-d), which is provided for bundling a magnetic flux supplied by the heating unit (12a-d) and which has at least one overlapping magnetic flux bundling element (20a-d) which, when the heating unit (12a-d) is viewed perpendicularly to the main extension plane, is arranged above the heating elements (14a-d, 16a-d) in an overlapping manner, wherein, when the heating unit (12a-d) is viewed perpendicularly to the main extension plane, regions (22a-d) of minimum distance between the heating elements (14a-d, 16a-d) are free of overlapping magnetic flux bundling elements (20a-d, 32a-d), and wherein, when the heating unit (12a-d) is viewed perpendicularly to the main extension plane, regions (22a-d) around at least one first main axis (24a-d) of the heating unit (12a-d), which is oriented at least substantially perpendicularly to at least one edge of the at least substantially polygonal shape of the outer heating element (16a-d), and around at least one second main axis (26a-d) of the heating unit (12a-d), which is oriented at least substantially perpendicularly to the first main axis (24a-d), are free of overlapping magnetic flux bundling elements (20a-d, 32a-d), **characterised in that**, when the heating unit (12a-d) is viewed perpendicularly to the main extension plane, a longitudinal axis (28a-d) of the overlapping magnetic flux bundling element (20a-d) is spaced apart from an intersection point (40a-d) of the main axes (24a-d, 26a-d).

2. Cooking appliance apparatus according to claim 1, **characterised in that**, when the heating unit (12a-d) is viewed perpendicularly to the main extension plane, a longitudinal axis (28a-d) of the overlapping magnetic flux bundling element (20a-d) encloses a minimum angle (30a-d) of at least 5° with the first main axis (24a-d).

3. Cooking appliance according to claim 1 or 2, **characterised in that** the magnetic flux bundling unit (18a-d) has at least one second overlapping magnetic flux bundling element (32a-d) which, when the heating unit (12a-d) is viewed perpendicularly to the main extension plane, is arranged together with the overlapping magnetic flux bundling element (20a-d) within a quadrant spanned by the main axes (24a-d, 26a-d).

4. Cooking appliance apparatus according to claim 3, **characterised in that**, when the heating unit (12a-d) is viewed perpendicularly to the main extension plane, a second longitudinal axis (34a-d) of the second overlapping magnetic flux bundling element (32a-d) encloses a minimum second angle (36a-d) of at least 5° with the second main axis (26a-d).

5. Cooking appliance apparatus at least according to claims 2 and 4, **characterised in that** the second angle (36a-d) is greater than the angle (30a-d).

6. Cooking appliance apparatus according to one of the preceding claims, **characterised in that**, when the heating unit (12a-d) is viewed perpendicularly to the main extension plane, the overlapping magnetic flux bundling element (20a-d) has a distance (38a-d) from an intersection point (40a-d) of the main axes (24a-d, 26a-d) of at least 5 mm.

7. Cooking appliance apparatus at least according to claim 3, **characterised in that**, when the heating unit (12a-d) is viewed perpendicularly to the main extension plane, the second overlapping magnetic flux bundling element (32a-d) has a second distance (42a-d) from an intersection point (40a-d) of the main axes (24a-d, 26a-d) of at least 2.5 mm.

8. Cooking appliance apparatus according to one of the preceding claims, **characterised in that** at least one of the heating elements (14a-d, 16a-d) has a main extension direction (44a-d) which is oriented at least substantially in parallel with the first main axis (24a-d).

9. Cooking appliance apparatus according to one of the preceding claims, **characterised in that**, when the heating unit (12a-d) is viewed perpendicularly to the main extension plane, the overlapping magnetic flux bundling element (20b) has an at least substantially conical shape.

10. Cooking appliance apparatus according to one of the preceding claims, **characterised in that** the magnetic flux bundling unit (18a-b; 18d) exclusively has overlapping magnetic flux bundling elements (20a, 32a; 20b, 32b; 20d, 32d).

11. Cooking appliance, in particular hob, with at least one cooking appliance apparatus (10a-d) according to one of the preceding claims.

## Revendications

1. Dispositif d'appareil de cuisson, en particulier dispositif de table de cuisson, comprenant au moins un bloc chauffant (12a-d) qui comprend au moins un élément chauffant intérieur (14a-d) et au moins un élément chauffant extérieur (16a-d) au moins essentiellement polygonal, dans lequel au moins un des éléments chauffants (14a-d, 16a-d) possède un plan d'extension principal, et comprenant au moins un dispositif de concentration de flux magnétique (18a-d) qui est conçu pour concentrer un flux magnétique fourni par le bloc chauffant (12a-d) et qui comprend au moins un élément de concentration de flux magnétique (20a-d) chevauchant agencé, sous un angle de vue vertical du bloc chauffant (12a-d) sur le plan d'extension principal, en chevauchement sur les éléments chauffants (14a-d, 16a-d), dans lequel, sous un angle de vue vertical du bloc chauffant (12a-d) sur le plan d'extension principal, des zones (22a-d) ménageant un écart minimal entre les éléments chauffants (14a-d, 16a-d) sont dépourvues d'éléments de concentration de flux magnétique chevauchants (20a-d, 32a-d), et dans lequel, sous un angle de vue vertical du bloc chauffant (12a-d) sur le plan d'extension principal, des zones (22a-d) situées à proximité d'au moins un premier axe principal (24a-d) du bloc chauffant (12a-d), qui est orienté au moins essentiellement perpendiculairement à au moins un bord de la forme au moins essentiellement polygonale de l'élément chauffant extérieur (16a-d) et à proximité d'au moins un second axe principal (26a-d) du bloc chauffant (12a-d), qui est orienté au moins essentiellement perpendiculairement au premier axe principal (24a-d), sont dépourvues d'éléments de concentration de flux magnétique chevauchants (20a-d, 32a-d),
**caractérisé en ce qu'**un axe longitudinal (28a-d) de l'élément de concentration de flux magnétique chevauchant (20a-d) est espacé d'un point d'intersection (40a-d) des axes principaux (24a-d, 26a-d), sous un angle de vue vertical du bloc chauffant (12ad) sur le plan d'extension principal.

2. Dispositif d'appareil de cuisson selon la revendication 1, **caractérisé en ce qu'**un axe longitudinal (28a-d) de l'élément de concentration de flux magnétique chevauchant (20a-d) forme un angle minimal (30a-d) d'au moins 5° avec le premier axe principal (24a-d), sous un angle de vue vertical du bloc chauffant (12a-d) sur le plan d'extension principal.

3. Dispositif d'appareil de cuisson selon la revendication 1 ou 2, **caractérisé en ce que** le dispositif de concentration de flux magnétique (18a-d) comprend au moins un second élément de concentration de flux magnétique chevauchant (32a-d), qui est disposé avec l'élément de concentration de flux magnétique chevauchant (20a-d) à l'intérieur d'un quadrant défini par les axes principaux (24a-d, 26a-d), sous un angle de vue vertical du bloc chauffant (12a-d) sur le plan d'extension principal.

4. Dispositif d'appareil de cuisson selon la revendication 3, **caractérisé en ce qu'**un second axe longitudinal (34a-d) du second élément de concentration de flux magnétique chevauchant (32a-d), sous un angle de vue vertical du bloc chauffant (12a-d) sur le plan d'extension principal, forme un second angle minimal (36a-d) d'au moins 5° avec le second axe principal (26a-d).

5. Dispositif d'appareil de cuisson selon au moins l'une des revendications 2 et 4, **caractérisé en ce que** le second angle (36a-d) est plus grand que l'angle (30a-d).

6. Dispositif d'appareil de cuisson selon l'une des revendications précédentes, **caractérisé en ce que** l'élément de concentration de flux magnétique chevauchant (20a-d), sous un angle de vue vertical du bloc chauffant (12a-d) sur le plan d'extension principal, est espacé d'une distance (38a-d) d'au moins 5 mm par rapport à un point d'intersection (40a-d) des axes principaux (24a-d, 26a-d).

7. Dispositif d'appareil de cuisson selon au moins la revendication 3, **caractérisé en ce que** le second élément de concentration de flux magnétique chevauchant (32a-d), sous un angle de vue vertical du bloc chauffant (12a-d) sur le plan d'extension principal, est espacé d'une seconde distance (42a-d) d'au moins 2,5 mm par rapport à un point d'intersection (40a-d) des axes principaux (24a-d, 26a-d).

8. Dispositif d'appareil de cuisson selon l'une des revendications précédentes, **caractérisé en ce qu'**au moins un des éléments chauffants (14a-d, 16a-d) présente une direction d'extension principale (44a-d) qui est orientée au moins essentiellement parallèlement au premier axe principal (24a-d).

9. Dispositif d'appareil de cuisson selon l'une des revendications précédentes, **caractérisé en ce que** l'élément de concentration de flux magnétique chevauchant (20b) présente une forme au moins essentiellement conique sous un angle de vue vertical du bloc chauffant (12b) sur le plan d'extension principal.

10. Dispositif d'appareil de cuisson selon l'une des revendications précédentes, **caractérisé en ce que** le dispositif de concentration de flux magnétique (18a-b, 18d) comprend exclusivement des éléments de concentration de flux magnétique chevauchants (20a, 32a, 20b, 32b, 20d, 32d).

11. Appareil de cuisson, en particulier table de cuisson, comprenant au moins un dispositif d'appareil de cuisson (10a-d) selon l'une des revendications précédentes.
